# EUROPÄISCHE PATENTSCHRIFT

(11) **EP 3 944 999 B1**
(45) Veröffentlichungstag und Bekanntmachung des Hinweises auf die Patenterteilung: **04.09.2024**
(21) Anmeldenummer: 21183724.0
(22) Anmeldetag: 05.07.2021
(51) Int. Cl.: B60W 30/08, B60W 30/095, B60W 30/18

(54) **VERFAHREN UND FAHRERASSISTENZSYSTEM ZUR BESTIMMUNG EINES FAHRSCHLAUCHS EINES NUTZFAHRZEUGS**
METHOD AND DRIVER ASSISTANCE SYSTEM FOR DETERMINING A VEHICLE PATH OF A COMMERCIAL VEHICLE
PROCÉDÉ ET SYSTÈME D'AIDE À LA CONDUITE PERMETTANT DE DÉTERMINER UN COULOIR DE CIRCULATION D'UN VÉHICULE UTILITAIRE

(30) Priorität: 31.07.2020 DE 102020120222
(43) Veröffentlichungstag der Anmeldung: 02.02.2022
(73) Patentinhaber: MAN Truck & Bus SE, 80995 München (DE)
(72) Erfinder: Braun, Reimar, 81735 München (DE)
(74) Vertreter: v. Bezold & Partner Patentanwälte - PartG mbB

(56) Entgegenhaltungen:
- EP-A2- 3 581 889
- DE-A1- 102014 226 764
- DE-A1- 102018 117 353
- DE-A1- 3 335 161

## Beschreibung

Die Erfindung betrifft ein Verfahren und ein Fahrerassistenzsystem zur Bestimmung eines Fahrschlauchs eines Nutzfahrzeugs.

Aus dem Stand der Technik sind Fahrerassistenzsysteme bekannt, die den Fahrer bei der Führung des Fahrzeugs unterstützen und/oder vor akuten Gefahren warnen, automatisch Maßnahmen zur Abwendung einer Kollisionsgefahr einleiten oder Sicherheitssysteme zur Vorbereitung auf die Kollision aktivieren. Hierbei sind insbesondere Fahrerassistenzsysteme bekannt, die den voraussichtlichen Kurs des eigenen Fahrzeugs und ferner einen Fahrschlauch des Fahrzeugs prädizieren. Die Fahrschlauchprädiktion dient beispielsweise dazu, um ein potentielles Kollisionsobjekt zu erfassen. Der Fahrschlauch wird zum Beispiel durch ein geometrisches Objekt repräsentiert, das durch eine der Trajektorie des Fahrzeugs entsprechende Mittellinie und eine bestimmte Fahrschlauchbreite definiert ist. Die Auswahl eines Zielobjektes erfolgt dann unter der Prämisse, dass nur Fahrzeuge innerhalb des Fahrschlauches für die Abstands- bzw. Geschwindigkeitsregelung relevant sind.

Das Dokument DE 10 2008 036 009 A1 offenbart beispielsweise ein Verfahren zum Kollisionsschutz eines Fahrzeugs, wobei das Umfeld des Fahrzeugs durch Sensorik wahrgenommen wird und abhängig von einer Fahrzeugeigenbewegung eine Kollisionswahrscheinlichkeit mit in der Umgebung befindlichen Objekten bestimmt wird. Aus der Fahrzeugeigenbewegung wird hierbei eine Fahrzeugtrajektorie prädiziert und ausgehend davon ein Fahrschlauch abgeleitet und dem Fahrer zum Befahren einer kollisionsfreien Bahn des Fahrzeugs dargestellt. Ferner ist das Bestimmen derartiger Fahrschläuche auch zur Unterstützung von Rangier- und Parkvorgängen bekannt.

Das Dokument DE 10 2012 004 791 A1 offenbart ein Verfahren, bei dem ein in Fahrtrichtung des eigenen Kraftfahrzeugs gerichteter virtueller Fahrschlauch bestimmt wird und mittels einer Umfeldsensorik ein etwaiges auf der Gegenverkehrsfahrspur fahrendes Gegenverkehrsfahrzeug ermittelt wird und eine Überprüfung erfolgt, ob das Gegenverkehrsfahrzeug in den virtuellen Fahrschlauch eindringen wird oder eingedrungen ist.

Das Dokument DE 10 2005 002 504 A1 offenbart eine Fahrschlauchprädiktion, die dazu dient, ob ein erfasstes Objekt als Zielobjekt für die Abstandsregelung auszuwählen ist oder ob dieses Objekt ein irrelevantes Objekt, beispielsweise ein Fahrzeug auf einer Nebenspur, ist.

Das Dokument EP 3 581 889 A2 offenbart ein computerimplementiertes Verfahren. Eine Karte wird erstellt. Ein Startpunkt und ein Zielpunkt werden in der Karte bestimmt. Transportdaten werden erfasst. Mindestens eine erste Route von dem Startpunkt zu dem Zielpunkt wird in der Karte ermittelt. Dreidimensionale Hindernisdaten werden auf der mindestens einen ersten Route ermittelt. Eine zweite Route wird basierend auf der mindestens einen ersten Route, den Transportdaten und den dreidimensionalen Hindernisdaten erstellt.

Das Dokument DE 33 35 161 A1 offenbart eine Lenkanordnung für die Vorderachse eines von einem Zugfahrzeug bewegten Anhängerfahrzeugs, die schwenkfest mit dem einen Ende einer Deichsel verbunden und frei einstellbar ist um einen Führungspunkt, in welchem das andere Ende der Deichsel mit dem Zugfahrzeug gekuppelt ist, wobei die zwischen der Achse und der Deichsel bestehende Winkeleinstellung mittels einer Zusatzlenkeinrichtung abhängig von dem Lenkwinkel des Zugfahrzeugs veränderbar ist.

Das Dokument DE 10 2014 226 764 A1 offenbart ein Verfahren zum Führen eines Fahrzeugs auf einer Fahrspur. Dabei wird eine unter Verwendung einer Klothoide ermittelte Solltrajektorie zum Führen des Fahrzeugs und zumindest ein auf eine Fahrt des Fahrzeugs auf der Fahrspur bezogener Parameter eingelesen.

Ferner offenbart das Dokument DE 10 2018 117 353 A1 ein Verfahren zur Knickwinkelbestimmung bei einem Fahrzeuggespann. Das Verfahren weist das Bestimmen einer Position eines Reflektors relativ zu einer Abstandssensorvorrichtung bei einer Geradeausfahrt des Fahrzeuggespanns auf. Das Verfahren weist das Bestimmen eines Ist-Knickwinkels des Fahrzeuggespanns mittels der Abstandssensorvorrichtung und des Reflektors während eines Betriebs des Fahrzeuggespanns nach der Geradeausfahrt basierend auf der ermittelten Position des Reflektors auf.

Es ist eine Aufgabe der Erfindung, die bekannten Ansätze zur Bestimmung eines Fahrschlauches zu verbessern, um für die Anwendung bei Nutzfahrzeugen eine genauere Bestimmung des Fahrschlauches zu ermöglichen.

Diese Aufgaben werden durch ein Verfahren und eine Vorrichtung mit den Merkmalen der unabhängigen Ansprüche gelöst. Vorteilhafte Weiterbildungen sind in den abhängigen Ansprüchen und der Beschreibung angegeben.

Ein erster allgemeiner Gesichtspunkt der vorliegenden Offenbarung betrifft ein Verfahren zur Bestimmung eines Fahrschlauchs eines Nutzfahrzeugs, bei dem eine zukünftige Fahrzeugtrajektorie des Nutzfahrzeugs und ferner ein Fahrschlauch in Abhängigkeit von der zukünftigen Fahrzeugtrajektorie bestimmt werden. Es wird somit eine Art virtueller Korridor ermittelt, der dem Fahrschlauch entspricht und der sich aus der momentanen Fahrtrichtung bzw. dem vorhergesagten Fahrweg des Fahrzeugs ergibt. Der Fahrschlauch gibt den prädizierten Fahrtverlauf des eigenen Fahrzeugs wieder. Es wird über diesen Fahrschlauch also prädiziert, wie das eigene Fahrzeug beispielsweise innerhalb der nächsten Sekunden weiterfahren wird und welcher Platzbedarf hierbei benötigt wird. Ansätze zur Bestimmung einer zukünftigen Fahrzeugtrajektorie und daraus abgeleitet eines Fahrschlauches sind an sich aus dem Stand der Technik bekannt, auf die vorliegend zurückgegriffen werden kann. Lediglich beispielhaft kann der Fahrschlauch durch ein geometrisches Objekt repräsentiert werden, das durch eine der Trajektorie des Fahrzeugs entsprechende Mittellinie und eine bestimmte Fahrschlauchbreite definiert ist. Die Fahrschlauchbreite hängt u. a. von der Fahrzeugbreite ab.

Erfindungsgemäß wird der Fahrschlauch abhängig von einem Betriebszustand des Nutzfahrzeugs bestimmt, wobei der Betriebszustand angibt, ob sich eine Liftachse des Nutzfahrzeugs im angehobenen, oder im abgesenkten Zustand befindet. Dies bietet den Vorteil einer genaueren Bestimmung des Fahrschlauchs für Nutzfahrzeuge. Dies ermöglicht eine deutlich verbesserte Vorhersage des benötigten Platzes bei Durchfahrt der zukünftigen Fahrzeugtrajektorie, insbesondere bei Kurvenfahrt, und bietet damit mehr Sicherheit für den Fahrer, aber auch für andere Verkehrsbeteiligte. Ob Hindernisse sich im Fahrschlauch befinden oder nicht, kann somit zuverlässiger erkannt werden. Der Fahrschlauch kann zusätzlich in Abhängigkeit der Achskonfiguration bestimmt werden.

Unter der Achskonfiguration werden die Anzahl und Art der Achsen verstanden, mit denen das Nutzfahrzeug ausgestattet ist, was auch die Gesamtzahl der Räder und die Zahl der gelenkten Räder umfassen kann. In der Praxis wird auch der Begriff Achsformel oder Radformel verwendet. Während Personenkraftwagen (PKWs) in der Regel eine gelenkte Vorderachse und eine nicht-lenkbare Hinterachse aufweisen, ist bei Nutzfahrzeugen die mögliche Varianz weitaus höher, was die möglichen Achskonfigurationen angeht.

So bieten Nutzfahrzeughersteller den gleichen Fahrzeugtyp oftmals in unterschiedlichen Achskonfigurationen an, z. B. mit wahlweise unterschiedlicher Anzahl der Achsen im Hinterachspaket, mit oder ohne Liftachse, mit oder ohne lenkbare Starrachsen etc. Die Achskonfiguration beeinflusst das Fahrverhalten, insbesondere das Kurvenfahrverhalten. Entsprechend ermöglicht die Berücksichtigung der Achskonfiguration bei der Bestimmung des Fahrschlauches eine genauere Bestimmung des Fahrschlauches.

Ferner kann ein aktueller Betriebszustand einer Achse des Nutzfahrzeugs das Fahrverhalten, insbesondere das Kurvenfahrverhalten, viel stärker beeinflussen als bei einem PKW. Ein Betriebszustand einer Achse beschreibt unterschiedliche das Fahrverhalten, insbesondere das Kurvenfahrverhalten, beeinflussende Zustände der Achse, die im Betrieb auftreten können. Beispielsweise hängt der Innenkreisradius und damit der Straßenbreitenbedarf bzw. die Breites des benötigten Fahrschlauches beim Kurvenfahren eines Nutzfahrzeugs davon ab, ob eine Liftachse angehoben ist oder nicht oder ob eine lenkbare Starrachse gerade lenkbar ist oder gerade arretiert ist. Insofern kann ein Fahrschlauch für unterschiedliche Betriebszustände der Achsen stets präzise bestimmt werden, wenn diese Betriebszustände der Achse, insbesondere deren Auswirkungen auf den Straßenbreitenbedarf und das Fahrverhalten des Fahrzeugs, in die Bestimmung des Fahrschlauchs eingehen.

Wie bereits erwähnt umfasst das Nutzfahrzeug mindestens eine Liftachse. Die Liftachse kann beispielsweise eine liftbare Vorderachse oder liftbare Nachlaufachse sein. Bei Aktivierung der Liftachse verändert sich der Radstand und folglich auch der Straßenbreitenbedarf. Entsprechend wird bei der Bestimmung des Fahrschlauches berücksichtigt, welche Auswirkung der aktuelle Zustand der Liftachse auf den Straßenbreitenbedarf des Nutzfahrzeugs hat. Der Fahrschlauch wird somit genauer bestimmt. So ist der Straßenbreitenbedarf bei einer Kurvenfahrt höher, wenn eine liftbare Vorlaufachse eines mehrachsigen Sattelaufliegers angehoben ist, als wenn die liftbare Vorlaufachse abgesenkt ist, da bei angehobener Liftachse der Radstand länger ist, somit der Kurveneinlauf größer ist, somit der innere Radius (fahrbare Innenkreis) kleiner ist und folglich die benötigte Breite des Fahrschlauchs zunimmt.

In einem weiteren Ausführungsbeispiel umfasst das Nutzfahrzeug mindestens eine gelenkte Achse. Die gelenkte Achse ist nicht die Vorderachse und vorzugsweise eine gelenkte Starrachse, beispielsweise eine gelenkte Vor- oder Nachlaufachse. Hierbei gibt der aktuelle Betriebszustand der Achse an, ob die gelenkte Starrachse sich momentan im lenkbaren Zustand oder im arretierten nicht-lenkbaren Zustand befindet. Es ist bekannt, dass derartige gelenkte Achsen bei höheren Fahrgeschwindigkeiten zur Verbesserung der Fahrstabilität und Fahrsicherheit arretiert werden können, so dass sie nicht mehr lenkbar sind. Im lenkbaren Zustand der gelenkten Achse ist der Straßenbreitenbedarf geringer als im arretierten Zustand, was bei der Bestimmung des Fahrschlauches berücksichtigt wird. Der Fahrschlauch wird somit genauer bestimmt.

In einem weiteren Ausführungsbeispiel wird die Breite des Fahrschlauchs bei einer Kurvenfahrt in Abhängigkeit von der Achskonfiguration und/oder des aktuellen Betriebszustands angepasst. Während bei Geradeausfahrten die benötigte Breite des Fahrschlauchs im Wesentlichen von den Fahrzeugabmessungen quer zur Fahrtrichtung abhängt, kann bei Kurvenfahrten der Straßenbreitenbedarf und damit die benötigte Fahrschlauchbreite zusätzlich von der Achskonfiguration und von Betriebszuständen der Achse abhängigen, was vorstehend erläutert wurde. Entsprechend kann über die Anpassung der Fahrschlauchbreite auf einfache Weise eine genaue Anpassung an den von der Achskonfiguration und/oder dem aktuellen Betriebszustand abhängigen Platzbedarf des Nutzfahrzeugs erzielt werden.

In einem weiteren Ausführungsbeispiel wird der aktuelle Betriebszustand in Abhängigkeit von einer momentanen Achslast des Nutzfahrzeugs bestimmt. Nutzfahrzeuge werden mit stark unterschiedlichen Beladungszuständen betrieben, z. B. Leerfahrt vs. Fahrt im voll beladenem Zustand, was entsprechend zu unterschiedlichen Achslasten führt. Die Höhe der Achslast hat jedoch Einfluss auf das Kurvenfahrverhalten, z. B. beeinflusst die aktuelle Achslast die auftretende Querbeschleunigung bei Kurvenfahrten und somit das Fahrtverhalten (Übersteuerung, Untersteuern in Kurven etc.) Entsprechend kann sich der benötigte Fahrschlauch, insbesondere die Fahrschlauchbreite, mit der Achslast ändern, was gemäß diesem Ausführungsbeispiel berücksichtigt wird. Die momentane Achslast kann beispielsweise mithilfe von mindestens einem Achslastsensor ermittelt werden, beispielsweise mithilfe eines On-Board-Wiegesystems, wie es aus der Praxis bekannt ist.

In einem weiteren Ausführungsbeispiel wird die aktuelle Achskonfiguration oder ein hieraus abgeleiteter Korrekturparameter, der bei der Bestimmung des Fahrschlauches verwendet wird, bei Fertigung des Nutzfahrzeugs im Nutzfahrzeug hinterlegt. Vorstehend wurde bereits erwähnt, dass Nutzfahrzeughersteller den gleichen Fahrzeugtyp oftmals in unterschiedlichen Achskonfigurationen anbieten, z. B. mit wahlweise unterschiedlicher Anzahl der Achsen im Hinterachspaket, mit oder ohne Liftachse, mit oder ohne lenkbare Starrachsen etc. Je nach Ausführung der aktuellen Achskonfiguration des hergestellten Nutzfahrzeugs kann diese Achskonfiguration z. B. in Form des Korrekturparameters im Rahmen der sog. "End-of-Line-Programmierung" des Fahrerassistenzsystems dort als Funktionsparameter hinterlegt werden, so dass die Fahrschlauchbestimmung an die aktuelle Achskonfiguration angepasst werden kann.

In einem weiteren Ausführungsbeispiel wird der Fahrschlauch in Abhängigkeit einer Reifenkonfiguration bestimmt. Die Reifenkonfiguration ist durch die Art der Bereifung des Nutzfahrzeugs bestimmt. Der Einfluss der Bereifung auf das Kurvenfahrtverhalten und damit den Fahrschlauch kann wiederum in Form eines Reifenkorrekturparameters in die Bestimmung des Fahrschlauches eingehen.

In einem weiteren Ausführungsbeispiel umfasst das Verfahren ferner das Erfassen von Hindernissen im Umfeld des Fahrzeugs mittels einer Umfeldsensorik und/oder einer Umfeldkarte des Nutzfahrzeugs und das Bestimmen, ob sich ein Hindernis innerhalb des bestimmten Fahrschlauches befindet. Die Umfeldsensorik kann beispielsweise einen Radar- und/oder Lidarsensor umfassen, der ausgebildet ist, das Umfeld des Nutzfahrzeugs zu erfassen.

In einem weiteren Ausführungsbeispiel kann die zukünftige Fahrzeugtrajektorie in Abhängigkeit von der Fahrzeugeigenbewegung und/oder zumindest einer der folgenden Größen bestimmt werden: einer Gierrate des Chassis, einer Querbeschleunigung des Chassis, einer Längsbeschleunigung des Chassis und einem erfassten Lenkwinkel der Räder. Grundsätzlich sind aus dem Stand der Technik eine Vielzahl von technischen Ansätzen bekannt, um die zukünftige Fahrzeugtrajektorie eines Ego-Fahrzeugs zu prädizieren, auf die vorliegend in diesem Zusammenhang zurückgegriffen werden kann.

In einem weiteren Ausführungsbeispiel erfolgt das Bestimmen des Fahrschlauchs zusätzlich auf Basis von einem oder mehreren Korrekturfaktoren und/oder einer Kennlinienschar. Die Korrekturfaktoren bzw. die Kennlinienschar geben eine Änderung des Fahrschlauchs bei einer Kurvenfahrt in Abhängigkeit von dem Betriebszustand, oder auch zusätzlich von der Achskonfiguration an. Diese Änderungen können anhand von Fahrversuchen mit unterschiedlichen Betriebszuständen oder zusätzlich auch mit unterschiedlichen Achskonfigurationen ermittelt werden, um hieraus experimentell die Korrekturparameter und/oder Kennlinienschar zu ermitteln. Anders ausgedrückt kann mittels experimenteller Fahrversuche, z. B. entlang einer vorbestimmten Teststrecke, messtechnisch jeweils der tatsächliche Fahrschlauch für unterschiedliche Achskonfigurationen und Betriebszustände ermittelt werden. Die Veränderung des gemessenen Fahrschlauches, z. B. die veränderte Breite des Fahrschlauchs beim Kurvenfahren, die sich jeweils bei unterschiedlichen Achskonfigurationen und Betriebszuständen ergeben, können anschließend ausgewertet und in Form von Korrekturparametern und/oder Kennlinien im Nutzfahrzeug hinterlegt werden. Für einen bestimmten Fahrzeugtyp kann somit auf einfache Weise eine genaue Bestimmung der Abhängigkeit des Fahrschlauches von der jeweiligen Achskonfiguration dieses Fahrzeugtyps und den unterschiedlichen Betriebszuständen der Achsen, die im Fahrbetrieb auftreten können, ermittelt werden.

Alternativ oder zusätzlich kann die Abhängigkeit des Fahrschlauches von der jeweiligen Achskonfiguration dieses Fahrzeugtyps und den unterschiedlichen Betriebszuständen der Achsen, die im Fahrbetrieb auftreten können, unter Verwendung entsprechender modellbasierter Fahr-Fahrzeugmodelle bzw. Fahrdynamikmodelle berechnet, z. B. simuliert, werden. Hierbei kann das Bestimmen des Fahrschlauchs einer Achse des Nutzfahrzeugs Folgendes umfassen: das Bestimmen eines korrigierten Eigenlenkgradienten und/oder eines korrigierten Ackermann-Lenkwinkels in Abhängigkeit von dem Betriebszustand oder zusätzlich auch von der Achskonfiguration mindestens einer Achse, einer Gierrate des Chassis, einer Querbeschleunigung des Chassis und einer Längsbeschleunigung des Chassis. Anschließend kann ein korrigierter Fahrschlauches in Abhängigkeit des korrigierten Eigenlenkgradienten und/oder eines korrigierten Ackermann-Lenkwinkels bestimmt werden. Dieser Ansatz bietet im Vergleich zu Testfahrten den Vorteil, dass bei Änderungen an den Achsen die Änderungen in der Regel durch entsorechende Änderungen der Fahrdynamikmodelle berücksichtigt werden können was in der Regel kosteneffizienter ist, als erneut Testfahrten durchzuführen.

Ein zweiter allgemeiner Gesichtspunkt der vorliegenden Offenbarung betrifft ein Fahrerassistenzsystem für ein Nutzfahrzeug, das ausgebildet ist, das Verfahren, wie es in diesem Dokument offenbart ist, durchzuführen.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, insbesondere im Hinblick auf die Bestimmung des Fahrschlauches in Abhängigkeit von der Achskonfiguration und/oder dem aktuellen Betriebszustand der mindestens einen Achse des Nutzfahrzeugs, sollen auch als entsprechende funktionale Merkmale des Fahrerassistenzsystems offenbart sein und gelten somit auch für das Fahrerassistenzsystem.

Gemäß einem weiteren Aspekt wird ein Nutzfahrzeug bereitgestellt, umfassend ein solches Fahrerassistenzsystem. Ein Nutzfahrzeug ist ein Fahrzeug, das durch seine Bauart und Einrichtung zur Beförderung von Personen, zum Transport von Gütern oder zum Ziehen von Anhängerfahrzeugen ausgelegt ist. So kann das Fahrzeug z. B. ein Lastkraftwagen, ein Sattelzug und/oder ein Omnibus sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein Ablaufdiagram eines Verfahrens gemäß einer Ausführungsform der Erfindung;
- Figur 2: eine schematische Darstellung unterschiedlicher Achskonfigurationen eines Nutzfahrzeugs;
- Figur 3: eine schematische Darstellung zweier Betriebszustände einer Liftachse eines Nutzfahrzeugs;
- Figur 4: eine schematische Darstellung zweier Betriebszustände einer lenkbaren Starrachse eines Nutzfahrzeugs;
- Figur 5: eine schematische Darstellung des geänderten Kurvenfahrverhaltens eines Nutzfahrzeugs bei unterschiedlichen Betriebszuständen der lenkbaren Starrachse;
- Figur 6: eine Illustration des Verfahrens gemäß einer Ausführungsform der Erfindung;
- Figur 7: eine schematische Darstellung zur experimentellen Bestimmung der Abhängigkeit des Fahrschlauches von der Achskonfiguration und/oder Betriebszuständen der Achse im Rahmen von Fahrversuchen;
- Figuren 8A und 8B: eine Illustration der Abhängigkeit des Ackermannwinkels und Eigenlenkgradienten von einem Betriebszustand einer Liftachse; und
- Figur 9: ein Blockdiagramm zur Illustration einer modellbasierten Bestimmung der Abhängigkeit des Fahrschlauches von der Achskonfiguration und/oder Betriebszuständen der Achse.

Gleiche oder äquivalente Elemente sind in allen Figuren mit denselben Bezugszeichen bezeichnet und zum Teil nicht gesondert beschrieben.

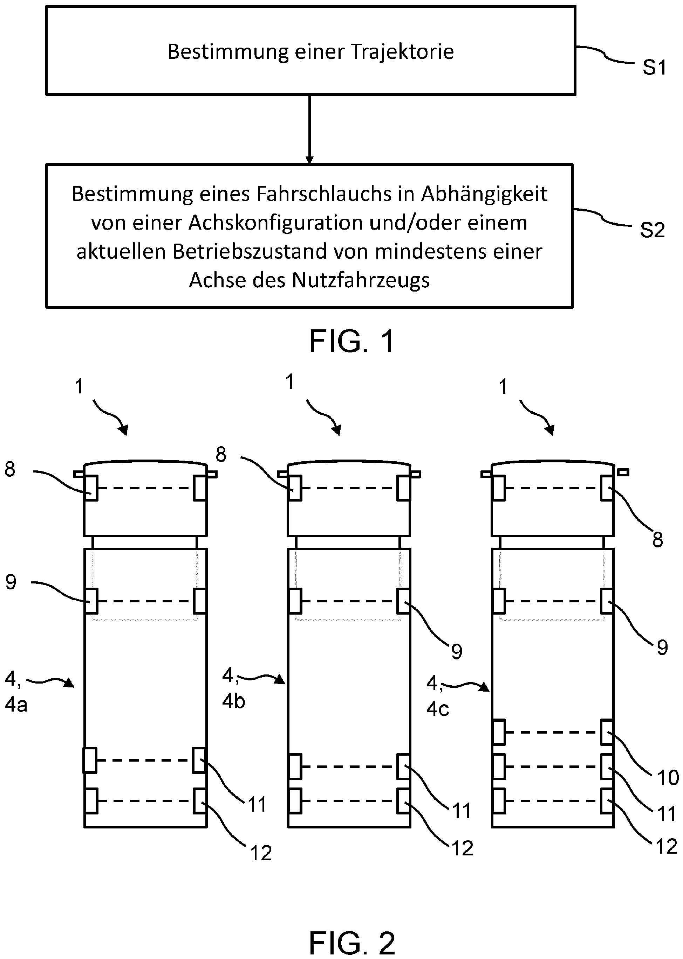

Figur 1 zeigt ein Ablaufdiagram eines Verfahrens gemäß einer Ausführungsform der Erfindung. Die Erfindung findet Anwendung in einem Nutzfahrzeug. In Schritt S1 erfolgt die Bestimmung einer zukünftigen Fahrzeugtrajektorie des Nutzfahrzeugs. Vorstehend wurde bereits festgestellt, dass aus dem Stand der Technik eine Vielzahl von technischen Ansätzen bekannt sind, die hierzu herangezogen werden können, um die zukünftige Fahrzeugtrajektorie eines Ego-Fahrzeugs zu prädizieren. Beispielsweise kann hierzu ein Fahrerassistenzsystem des Nutzfahrzeugs eine Trajektorie ermitteln, die ein oder mehrere Randbedingungen erfüllt. Bei der Ermittlung einer Trajektorie können u. a. fahrdynamische Aspekte berücksichtigt werden. Insbesondere kann in Abhängigkeit von ein oder mehreren Fahrzeugparametern und/oder in Abhängigkeit von einer aktuellen Fahrsituation eine zukünftige Trajektorie ermittelt werden, die mit dem Nutzfahrzeug realistisch gefahren werden kann. Dabei kann eine vom Nutzfahrzeug umsetzbare Krümmung berücksichtigt werden. Weitere Beispiele für Fahrzeugparameter, die berücksichtigt werden können, sind eine (bei der aktuellen Fahrsituation umsetzbare) Beschleunigung oder Verzögerung des Fahrzeugs. Der eine oder die mehreren Fahrzeugparameter können in einem Fahrzeug-Modell berücksichtigt werden. Beispielsweise kann die zukünftige Fahrzeugtrajektorie in Abhängigkeit von der Fahrzeugeigenbewegung und zumindest einer der folgenden Größen bestimmt werden: einer Gierrate des Chassis, einer Querbeschleunigung des Chassis, einer Längsbeschleunigung des Chassis und einem erfassten Lenkwinkel der Räder.

In Schritt S2 wird anschließend ein Fahrschlauch in Abhängigkeit von der zukünftigen Fahrzeugtrajektorie bestimmt. Es wird somit eine Art virtueller Korridor ermittelt, der dem Fahrschlauch entspricht und der sich aus der bestimmten Fahrzeugtrajektorie ergibt. Der Fahrschlauch gibt gemäß der Fahrzeugtrajektorie den prädizierten Fahrtverlauf des eigenen Fahrzeugs wieder und zeigt über die Breite des Fahrschlauchs an, welcher Platzbedarf hierbei benötigt wird. Lediglich beispielhaft kann der Fahrschlauch durch ein geometrisches Objekt repräsentiert werden, das durch eine der Trajektorie des Fahrzeugs entsprechende Mittellinie und eine bestimmte Fahrschlauchbreite definiert ist. Die Fahrschlauchbreite hängt beim Geradeausfahren von der Fahrzeugbreite ab, beim Kurvenfahren jedoch zusätzlich von der vom Nutzfahrzeug umsetzbaren Krümmung und dem Kurvenfahrverhalten, was wiederum von der Achskonfiguration und den momentanen Betriebszuständen der Achse des Nutzfahrzeugs abhängt.

Das erfindungsgemäße Verfahren zur Bestimmung eines Fahrschlauchs zeichnet sich nun dadurch aus, dass der Fahrschlauch in Abhängigkeit von einer Achskonfiguration und/oder einem aktuellen Betriebszustand von mindestens einer Achse des Nutzfahrzeugs bestimmt wird. Dies bietet den Vorteil einer genaueren Bestimmung des Fahrschlauchs für Nutzfahrzeuge. Dies ermöglicht eine deutlich verbesserte Vorhersage des benötigten Platzes bei Durchfahrt der zukünftigen Fahrzeugtrajektorie, insbesondere bei Kurvenfahrt, und bietet damit mehr Sicherheit für den Fahrer, aber auch für andere Verkehrsbeteiligte. Ob Hindernisse sich im Fahrschlauch befinden oder nicht, kann somit zuverlässiger erkannt werden.

Dies wird nachfolgend anhand der Figuren 2 bis 9 illustriert.

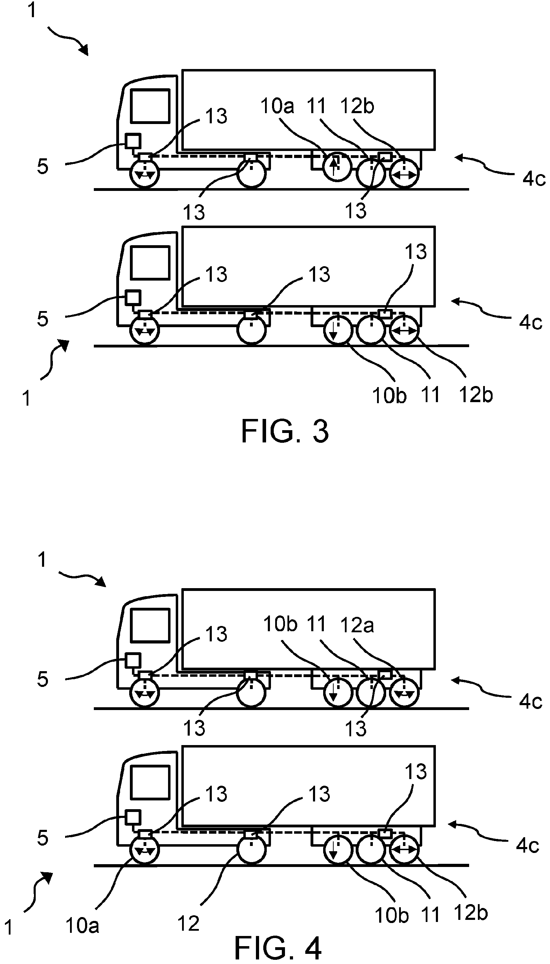

Figur 2 zeigt eine schematische Darstellung unterschiedlicher Achskonfigurationen 4 eines Nutzfahrzeugs 1, das vorliegend ein Sattelzug ist. Das Nutzfahrzeug kann vom Hersteller beispielsweise in unterschiedlichen Achskonfigurationen 4 angeboten werden. Alle der hier abgebildeten Ausführungen des Nutzfahrzeugs 1 haben eine lenkbare Vorderachse 8 und eine starre Antriebsachse 9 der Sattelzugmaschine. Die Achskonfigurationen 4 unterscheiden sich hier beispielhaft in der Anzahl und Art der Achsen im Hinterachspaket. Die Achskonfiguration 4a des auf der linken Seite abgebildeten Nutzfahrzeugs 1 hat nur ein Doppelachsaggregat, das aus zwei nicht-lenkbaren Starrachsen 11, 12 besteht. Das Nutzfahrzeug 1 in der Mitte weist dagegen eine Achskonfiguration 4b mit einem Doppelachsaggregat auf, bei dem die hintere Nachlaufachse 12 lenkbar ist. Die lenkbare Nachlaufachse 12 kann ferner zwei unterschiedliche Betriebszustände einnehmen, nämlich einen lenkbaren Zustand 12a und einen arretierten, nicht-lenkbaren Zustand 12b, was in Figur 4 illustriert ist. Auf der rechten Seite ist ein Nutzfahrzeug 1 mit einer Achskonfiguration 4c mit drei Achsen am Hinterachspaket, wobei die Vorlaufachse 10 als Liftachse ausgeführt ist und die Nachlaufachse 12 als lenkbare Nachlaufachse 12 ausgeführt ist.

Je nach Ausführung der aktuellen Achskonfiguration 4 des hergestellten Nutzfahrzeugs 1 kann diese Achskonfiguration 4a, 4b oder 4c z. B. in Form des Korrekturparameters im Rahmen der sog. "End-of-Line-Programmierung" des Fahrerassistenzsystems dort als Funktionsparameter hinterlegt werden, so dass die Fahrschlauchbestimmung an die aktuelle Achskonfiguration angepasst werden kann. Mittels des Korrekturparameters kann beispielsweise die Fahrschlauchbreite bei Kurvenfahrten an die vorliegende Achskonfiguration angepasst werden.

Beispielsweise hängt der Innenkreisradius und damit der Straßenbreitenbedarf bzw. die Breite des benötigten Fahrschlauches beim Kurvenfahren eines Nutzfahrzeugs davon ab, ob eine Achskonfiguration 4c mit lenkbarer Nachlaufachse vorliegt oder eine Achskonfiguration 4b ohne lenkbare Nachlaufachse 12. Der Fahrschlauch bei Kurvenfahrten mit einer Achskonfiguration 4c kann eine geringere Breite aufweisen als der korrespondierende Fahrschlauch mit einer Achskonfiguration 4b, was mittels des Korrekturparameters beispielhaft berücksichtigt werden kann.

Figur 3 zeigt eine schematische Darstellung zweier Betriebszustände einer Liftachse eines Nutzfahrzeugs, die gemäß der Ausführungsform im Fahrbetrieb erfasst und zur Bestimmung des Fahrschlauches verwendet werden. Beispielhaft zeigt Figur 3 das Nutzfahrzeug 1 mit der Achskonfiguration 4c der Figur 2.

Oben in Figur 3 ist das Nutzfahrzeug 1 mit der Liftachse 10 im angehobenen (gelifteten) Betriebszustand 10a dargestellt. Unten in Figur 3 ist das Nutzfahrzeug 1 mit der Liftachse 10 im abgesenkten (nicht-gelifteten) Betriebszustand 10b dargestellt. Die lenkbare Nachlaufachse 12 befindet sich jeweils im arretierten, d. h. nicht-lenkbaren, Betriebszustand 12b.

Das Fahrerassistenzsystem 5, hier schematisch dargestellt als ein Steuergerät, in welchem das Fahrerassistenzsystem programmtechnisch realisiert ist, ist eingerichtet, den aktuellen Betriebszustand der liftbaren Vorlaufachse 10 und der lenkbaren Nachlaufachse 12 zu erfassen.

Figur 4 zeigt wiederum das Nutzfahrzeug 1 mit der Achskonfiguration 4c und illustriert zwei Betriebszustände der lenkbaren Nachlaufachse 12. Oben in Figur 4 ist das Nutzfahrzeug 1 mit der Nachlaufachse 12 im lenkbaren Betriebszustand 12a dargestellt. Unten in Figur 4 ist das

Nutzfahrzeug 1 mit der Nachlaufachse 12 im arretierten (nicht-lenkbaren) Betriebszustand 12b dargestellt. Dies ist beispielsweise bei höheren Fahrgeschwindigkeiten der Fall, wo aus Fahrstabilitäts- und sicherheitsgründen die Nachlaufachse 12 arretiert wird.

Optional können ferner eine oder mehrere Achslastsensoren 13 vorgesehen sein, um das Gewicht, welches auf den Achsen lastet, zu erfassen, was ebenfalls in den Figuren 3 und 4 dargestellt ist. Das Fahrerassistenzsystem 5 ist eingerichtet, die aktuellen Werte der Achslastsensoren 13 zu erfassen. Das Fahrerassistenzsystem 5 ist ferner eingerichtet, die gemessenen Werte an den verschiedenen Achsen zu einer weiteren Bestimmung des Fahrschlauchs zu verwenden.

Die in Figur 3 und Figur 4 dargestellten Achskonfigurationen mit verschiedenen Betriebszuständen sollen rein beispielhaft sein. Es ist allgemein bekannt, dass viele verschiedene Variationsmöglichkeiten der dargestellten Achsen möglich sind.

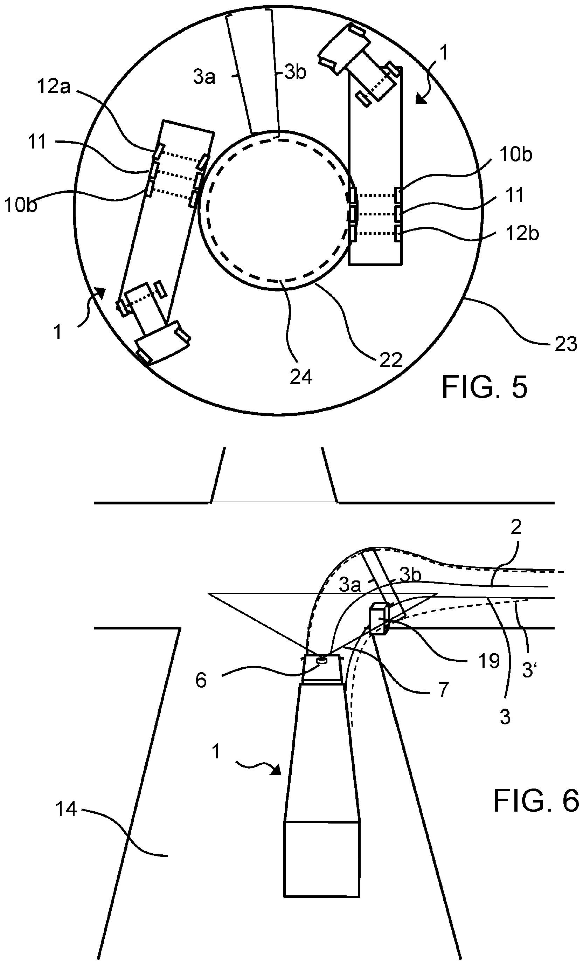

Vorstehend wurde bereits festgestellt, dass ein aktueller Betriebszustand einer Achse des Nutzfahrzeugs das Fahrverhalten, insbesondere das Kurvenfahrverhalten, viel stärker beeinflusst als bei einem PKW. Dies ist nachfolgend nochmals anhand von Figur 5 illustriert, die beispielhaft eine schematische Darstellung des geänderten Kurvenfahrverhaltens eines Nutzfahrzeugs bei unterschiedlichen Betriebszuständen der lenkbaren Starrachse 15 zeigt.

Aus dem Stand der Technik ist allgemein bekannt, dass verschiedene Betriebszustände von Achsen Einfluss auf das Kurvenverhalten von Nutzfahrzeugen haben, vgl. auch die Abbildung 4.72 auf Seite 246 im Fachbuch "Hoepke E., Breuer S.: Nutzfahrzeugtechnik, Grundlagen Systeme Komponenten (7. Auflage), Wiesbaden, 2013", die ähnlich wie Figur 5 das betriebszustandsabhängige Kurvenfahrverhalten illustriert.

Figur 5 zeigt zwei Nutzfahrzeuge 1 der Achskonfigurationen 4c mit fünf Achsen, welche mit demselben Lenkwinkel δ an der lenkbaren Vorderachse 8 einen Kreis fahren. Das hierbei auf der linken Seite dargestellte Nutzfahrzeug 1 weist eine hintere Nachlaufachse im gelenkten Betriebszustand 12a und eine liftbare Vorlaufachse im abgesenkten Betriebszustand 10b auf. Der Außenradius 23 zeigt die Außenkontur beider abgebildeten Nutzfahrzeuge 1, welche bei Kreisfahrt entsteht. Die dargestellte Kreisfahrt kann dem Wendekreis des Nutzfahrzeugs 1 entsprechen. Der Innenradius 22 zeigt den durch den Auflieger entstehenden Innenkreis bei gelenkter Nachlaufachse, d. h., die Nachlaufachse 12 ist im Betriebszustand 12a. Das Nutzfahrzeug 1 auf der rechten Seite hat im Gegensatz zu dem auf der linken Seite eine arretierte

Nachlaufachse, so dass sich die Nachlaufachse im Betriebszustand 12b befindet. Der Innenradius 24 bei arretierter Nachlaufachse 12, 12b ist im Gegensatz zu dem Innenradius 22 bei gelenkter Nachlaufachse 12, 12a kleiner. Somit ergeben sich bei angenommener Kreisfahrt je nach Betriebszustand bzw. je nach Betriebszuständen der Achsen zwei verschiedene Straßenbreitenbedarfe, welche sich in der Breite 3a, 3b unterscheiden. Vorliegend wird der veränderte Straßenbreitenbedarf genutzt, um den zur Durchführung der zukünftigen Fahrzeugtrajektorie benötigten Fahrschlauch entsprechend anzupassen. Konkret wird die Breite des Fahrschlauchs an Stellen, an denen das Nutzfahrzeug 1 gemäß der zukünftigen Fahrzeugtrajektorie eine Kurve bzw. eine gekrümmte Bahn fährt, angepasst - derart, dass die angepasste Breite dem Straßenbreitenbedarf entspricht, der sich aus dem aktuellen Betriebszustand der Achsen ergibt.

Das Nutzfahrzeug 1 mit gelenkter Nachlaufachse 12, 12a weist z. B. einen schmaleren Fahrschlauch 3a auf als das Fahrzeug mit arretierter Nachlaufachse 12, 12b und dem zugehörigen Fahrschlauch 3b. Die konkrete Ausführung des Nutzfahrzeugs 1 soll lediglich als Bespiel dienen und das Prinzip verdeutlichen, wie Achszustände den resultierenden Straßenbreitenbedarf und damit den benötigten Fahrschlauch beeinflussen.

Ähnliche Effekte stellen sich auch mit Einflüssen von Liftachsen oder einer Kombination von lift- und lenkbaren Achsen ein. Vorstehend wurde bereits festgestellt, dass sich bei Aktivierung der Liftachse z. B. der Radstand und folglich auch der Straßenbreitenbedarf ändert. Entsprechend wird bei der Bestimmung des Fahrschlauches berücksichtigt, welche Auswirkung der aktuelle Zustand der Liftachse auf den Straßenbreitenbedarf des Nutzfahrzeugs hat. Der Fahrschlauch wird somit genauer bestimmt. So ist der Straßenbreitenbedarf bei einer Kurvenfahrt höher, wenn eine liftbare Vorlaufachse eines mehrachsigen Sattelaufliegers angehoben ist, als wenn die liftbare Vorlaufachse abgesenkt ist, da bei angehobener Liftachse der Radstand länger ist, somit der Kurveneinlauf größer ist, somit der innere Radius (fahrbare Innenkreis) kleiner ist und folglich die benötigte Breite des Fahrschlauchs zunimmt.

Figur 6 zeigt eine Illustration des Verfahrens gemäß einer Ausführungsform der Erfindung. Die in Schritt S1 bestimmte zukünftige Fahrzeugtrajektorie ist hier mit dem Bezugszeichen 2 dargestellt und zeigt an, dass das Nutzfahrzeug 1 auf der Fahrbahn 14 an der Kreuzung nach rechts abbiegen will. Anschließend wird der Fahrschlauch 3 bestimmt. Bei Geradeausfahrt entspricht dieser im Wesentlichen der Fahrzeugbreite zzgl. ggf. eines Sicherheitspuffers. Bei Kurvenfahrten ist der Fahrschlauch 3 breiter und berücksichtigt den Straßenbreitenbedarf des Nutzfahrzeugs bei einer gekrümmten Fahrbahn, ähnlich wie es in Figur 5 dargestellt ist.

Bei der Bestimmung des Fahrschlauches wird der Betriebszustand der Liftachse 10 und der lenkbaren Achse 12 berücksichtigt. Figur 6 zeigt beispielhaft einen ersten Fahrschlauch 3 mit Breite 3a, der bestimmt wird, falls das Fahrerassistenzsystem 5 ermittelt, dass die lenkbare Achse 12 im lenkbaren Zustand 12a ist. Fährt das Nutzfahrzeug jedoch in die Kreuzung mit arretierter Achse 12 ein, ermittelt das Fahrerassistenzsystem aufgrund des erhöhten Straßenbreitenbedarfs einen Fahrschlauch 3' (dargestellt durch die gestrichelte Linie) mit Breite 3b.

Das Nutzfahrzeug umfasst ferner einen Umfeldsensor 6, zum Beispiel einen radarbasierten Umfeldsensor, zur Erfassung eines vorliegenden Umfelds 7 des Nutzfahrzeugs 1. Hierbei wird ein Hindernis 19 erkannt. In der Darstellung der Figur 6 ist erkennbar, dass das Hindernis im Bereich des prädizierten Fahrschlauchs 3' liegt, nicht jedoch im Bereich des prädizierten Fahrschlauchs 3. Die Anpassung des Fahrschlauchs an die Betriebszustände der Achse ermöglicht somit eine genauere Bestimmung des Fahrschlauches und eine zuverlässigere Bestimmung, ob etwaige Hindernisse im Fahrschlauch liegen oder nicht.

Falls somit das Nutzfahrzeug in einem Betriebszustand der Achsen in die Kreuzung einfährt, für den der Fahrschlauch 3' ermittelt wurde, können ein entsprechender Warnhinweis auf das Hindernis 19 an den Fahrer ausgegeben werden, so dass dieser entsprechend reagieren kann.

Falls das Nutzfahrzeug als automatisiert betriebenes und/oder betreibares Nutzfahrzeug ausgebildet ist, kann in diesem Fall automatisch eine geänderte Fahrzeugtrajektorie 2 und ein korrespondierender Fahrschlauch berechnet werden, derart, dass das Hindernis 19 nicht mehr im Fahrschlauch liegt.

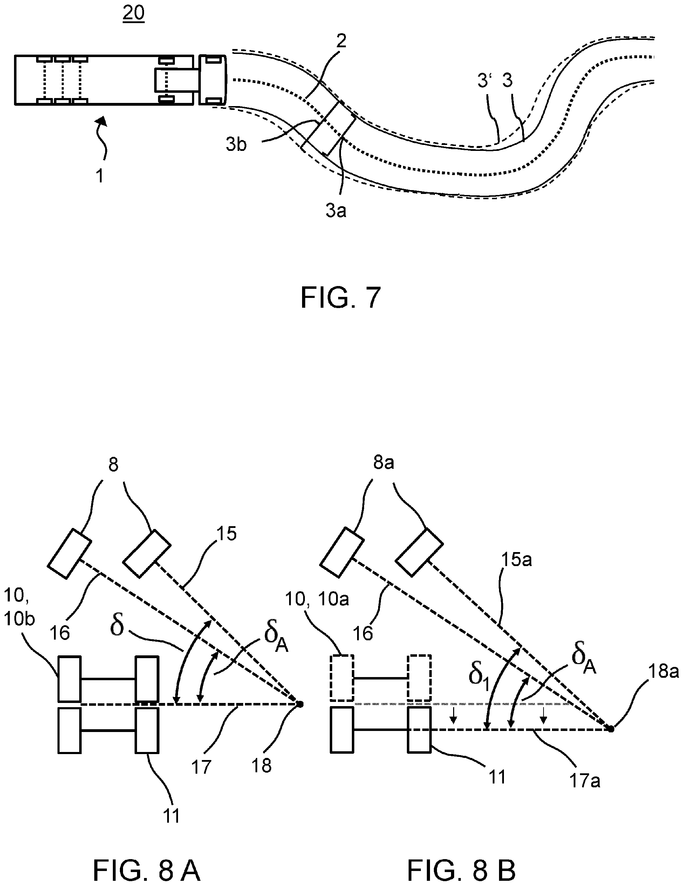

Figur 7 zeigt eine schematische Darstellung zur experimentellen Bestimmung der Abhängigkeit des Fahrschlauches von der Achskonfiguration und/oder Betriebszuständen der Achse im Rahmen von Fahrversuchen 20. Hierbei wird eine Teststrecke mehrmals mit Fahrzeugen 1 durchfahren, die unterschiedliche Achskonfigurationen aufweisen. Für jede Achskonfiguration wird die Teststrecke wiederum mehrmals durchfahren mit unterschiedlichen Betriebszuständen der Achsen, z. B. Durchfahren der Teststrecke mit Liftachse angehoben und abgesenkt, mit lenkbarer Nachlaufachse im gelenkten Zustand und im arretierten Zustand.

Falls das Fahrzeuggewicht als Parameter zur Anpassung des Fahrschlauches verwendet wird, wird die Testrecke mit verschiedenen Beladungszuständen durchfahren. Die Teststrecke ist zweckmäßig so zu wählen, dass dort möglichst unterschiedliche Fahrmanöver, insbesondere Kurvenfahrten, zu absolvieren sind.

Für jede Achskonfiguration und die unterschiedlichen Betriebszustände wird dann der tatsächlich durchfahrende Fahrschlauch messtechnisch ermittelt. Auf diese Weise kann experimentell ermittelt werden, wie sich die jeweils unterschiedlichen Achskonfigurationen und Betriebszustände auf den gemessenen Fahrschlauch auswirken. Lediglich beispielhaft ergibt sich bei einer ersten Durchfahrt der Teststrecke mit dem Nutzfahrzeug 2 in einem ersten Betriebszustand der Fahrschlauch 3 und bei einer zweiten Durchfahrt der Teststrecke in einem zweiten Betriebszustand, bei im Vergleich zum ersten Betriebszustand z. B. die Liftachse einen andere Zustand aufweist, der Fahrschlauch 3`. Beispielsweise kann die veränderte Breite des Fahrschlauchs beim Kurvenfahren für eine vorgegebene Fahrtzeugtrajektorie ermittelt werden, abhängig davon, ob sich eine Liftachse im angehobenen oder abgesenkten Zustand befindet usw. Das Ergebnis kann dann in Form von Korrekturparametern und/oder Kennlinien im Nutzfahrzeug hinterlegt werden und zur Anpassung des Fahrschlauches verwendet werden. Für einen bestimmten Fahrzeugtyp kann somit auf einfache Weise eine genaue Bestimmung der Abhängigkeit des Fahrschlauches von der jeweiligen Achskonfiguration dieses Fahrzeugtyps und den unterschiedlichen Betriebszuständen der Achsen, die im Fahrbetrieb auftreten können, ermittelt und im Fahrerassistenzsystem programmtechnisch hinterlegt werden.

Alternativ oder zusätzlich kann die Abhängigkeit des Fahrschlauches von der jeweiligen Achskonfiguration dieses Fahrzeugtyps und den unterschiedlichen Betriebszuständen der Achsen, die im Fahrbetrieb auftreten können, unter Verwendung entsprechender modellbasierter Fahrzeugmodelle bzw. Fahrdynamikmodelle berechnet, z. B. simuliert, werden.

Die Figuren 8A und 8B illustrieren in diesem Zusammenhang beispielhaft die Abhängigkeit des Ackermannwinkels und Eigenlenkgradienten von einem Betriebszustand einer Liftachse.

Figur 8A zeigt in einer Draufsicht beispielhaft eine gelenkte Vorderachse 8 sowie ein Doppelachsaggregat 10, 11 mit einer Starrachse und einer liftbarer Vorlaufachse 10 im abgesenkten Betriebszustand 10b. Bedingung für die reibungsfreie Kurvenfahrt ist, dass sich die Polstrahlen jedes Rades in einem gemeinsamen Schnittpunkt, dem Momentanpol 18, treffen. Der Momentanpol 18 ist bei einer ebenen Bewegung eines starren Körpers derjenige Raumpunkt, um den der Körper als nur drehend angesehen und behandelt werden kann. Wie in Figur 8A gezeigt, treffen sich die Verlängerungen der Polstrahlen 15, 16, 17 jedes Rades bzw. der Achskombination senkrecht zur Drehachse dieser Achskonfiguration in einem Schnittpunkt, dem Momentanpol 18. Bei einer idealen Kreisfahrt ohne über- oder untersteuerndes Fahrverhalten treten so keine Querkräfte an den verschiedenen Rädern auf. In anderen Worten findet hier nur eine Abrollbewegung der Reifen auf dem Untergrund statt. Jedoch ist bei dem gezeigten Doppelachsaggregat 10, 11 ein reines Abrollen nicht möglich, weil der Polstrahl 17 zwischen den Achsen 10, 11 liegt. Dieses Phänomen führt in der Praxis dazu, dass Reifen einer solchen Kombination einen deutlich höheren Verschleiß haben und dass mehr Energie in Form von Treibstoff für einen Antrieb benötigt wird. Die eingeschlossenen Winkel zwischen den Polstrahlen der Vorderachse und der Achskombination der Hinterachsen stellen zum einen den Lenkwinkel δ und den Ackermannwinkel δ_{A} dar.

Hingegen zeigt Figur 8B einen Betriebszustand mit einer gelifteten Vorlaufachse 10, 10a. Hierdurch verschiebt sich geometrisch der Polstrahl 17 der hinteren Achskombination nach unten auf Höhe der Starrachse 11 und bildet einen neuen verschobenen Pohlstrahl 17a, was auch bedeutet, dass der Radstand länger wird. Damit sich noch immer alle Polstrahlen der verschiedenen Räder in einem Punkt treffen können, muss der Lenkwinkel δ eines der Vorderräder angepasst werden, hin zu einem angepassten Lenkwinkel δ₁. In diesem Fall ergibt sich somit ein neuer Polstrahl 15a des rechten Vorderrades. Durch die Verschiebungen treffen sich somit die Pohlstrahlen 15a, 16, 17a in einem nach unten und rechts versetzten Momentanpol 18a. Somit verändern sich die Relationen des Lenkwinkels δ und des Ackermannwinkels δ_{A} abhängig vom Betriebszustand der liftbaren Achse 10.

Diese Veränderung der geometrischen Größen hat Einfluss auf das Fahrverhalten eines Nutzfahrzeugs 1 und somit auch auf den sich aus einer Trajektorie 21 ergebenden Fahrschlauch 20. Abhängig von der Geschwindigkeit treten natürlich auch Querbeschleunigungen auf, die Einfluss auf das Fahrverhalten haben und entsprechend unter Verwendung entsprechender aus der Fachliteratur bekannter modellbasierter Fahrzeugmodelle bzw. Fahrdynamikmodelle berechnet, z. B. simuliert, werden können.

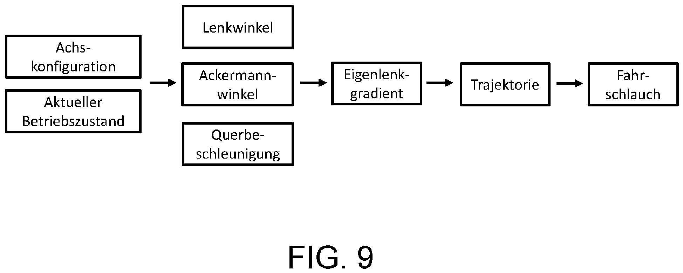

Eine maßgebliche Größe zur Bestimmung einer Trajektorie 21 eines Nutzfahrzeugs 1, die hier verwendet werden kann, ist der Eigenlenkgradient. Wie aus dem Stand der Technik und einschlägigen Fachbüchern bekannt, ergibt sich der Eigenlenkgradient aus dem Lenkwinkel δ, dem Ackermannwinkels δ_{A} und der Querbeschleunigung eines Fahrzeugs. Dieser Zusammenhang ist in Figur 9 dargestellt. Die Achskonfiguration 3, 4, 5 sowie der aktuelle Betriebszustand 10a, 10b, 12a, 12b verschiedener Achsen haben Einfluss auf den Lenkwinkel δ, den Ackermannwinkel δ_{A} und die Querbeschleunigung. Aus diesen Größen lässt sich der Eigenlenkgradient bestimmen, daraus eine resultierende Trajektorie und von dieser abgeleitet ein Fahrschlauch.

### Bezugszeichenliste

- 1: Nutzfahrzeug
- 2: Fahrzeugtrajektorie
- 3, 3`: Fahrschlauch
- 3a: Fahrschlauchbreite mit bspw. gelenkter Nachlaufachse
- 3b: Fahrschlauchbreite mit bspw. arretierter gelenkter Nachlaufachse
- 4: Achskonfiguration
- 4a: Achskonfiguration mit 3 Achsen
- 4b: Achskonfiguration mit 4 Achsen
- 4c: Achskonfiguration mit 5 Achsen
- 5: Fahrerassistenzsystem
- 6: Umfeldsensor, z.B. Radar
- 7: Erfassungsbereich
- 8: Lenkbare Vorderachse
- 8a: Korrigerter Lenkwinkel eines Rades der Vorderachse
- 9: Starre Antriebsachse
- 10: Liftbare Vorlaufachse
- 10a: Vorlaufachse: Betriebszustand gelifted
- 10b: Vorlaufachse: Betriebszustand abgesenkt
- 11: Starrachse
- 12: Lenkbare Nachlaufachse
- 12a: Nachlaufachse: Betriebszustand gelenkt
- 12b: Nachlaufachse: Betriebszustand arretiert
- 13: Achslastsensor
- 14: Fahrbahn
- 15: Polstrahl rechtes Vorderrad
- 15a: Polstrahl rechtes Vorderrad nach Anhebung der Liftachse
- 16: Polstrahl linkes Vorderrad
- 17: Polstrahlkombination der beiden Hinterachsen
- 17a: Polstrahl der Hinterachse 11
- 18: Momentanpol
- 18a: Momentanpol nach Anhebung der Liftachse
- 19: Hindernis
- 20: Fahrversuch
- 22: Innenradius bei gelenkter Nachlaufachse
- 23: Außenradius bei gelenkter und arretierter Nachlaufachse
- 24: Innenradius bei arretierter Nachlaufachse
- δ: Lenkwinkel
- δ₁: Lenkwinkel nach Liftachsanhebung
- δ_{A}: Ackermannwinkel

## Patentansprüche

1. Verfahren zur Bestimmung eines Fahrschlauchs eines Nutzfahrzeugs (2), wobei das Verfahren die Schritte umfasst:
- Bestimmung (S1) einer zukünftigen Fahrzeugtrajektorie (2); und
- Bestimmung (S2) eines Fahrschlauchs (3) in Abhängigkeit von der zukünftigen Fahrzeugtrajektorie (2);
wobei der Fahrschlauch (3) in Abhängigkeit von einem aktuellen Betriebszustand von mindestens einer Achse des Nutzfahrzeugs (1) bestimmt wird, wobei das Nutzfahrzeug (1) mindestens eine Liftachse (1) umfasst, die vorzugsweise eine liftbare Vor- oder Nachlaufachse ist, und der aktuelle Betriebszustand der Achse angibt, ob die Liftachse sich momentan im angehobenen (10a) oder abgesenkten (10b) Zustand befindet.

2. Verfahren nach Anspruch 1, wobei der Fahrschlauch (3) zusätzlich in Abhängigkeit von einer Achskonfiguration (4) des Nutzfahrzeugs (1) bestimmt wird.

3. Verfahren nach einem der vorherigen Ansprüche, wobei das Nutzfahrzeug (1) mindestens eine gelenkte Achse (12) umfasst, die nicht die Vorderachse ist und vorzugsweise eine gelenkte Starrachse (12), beispielsweise eine gelenkte Vor- oder Nachlaufachse, ist, und der aktuelle Betriebszustand der Achse zusätzlich angibt, ob die gelenkte Starrachse sich momentan im lenkbaren Zustand (12a) oder im arretierten nicht-lenkbaren Zustand (12b) befindet.

4. Verfahren nach einem der vorherigen Ansprüche, wobei eine Breite (3a, 3b) des Fahrschlauchs (3) bei einer Kurvenfahrt in Abhängigkeit von der Achskonfiguration (4) und/oder des aktuellen Betriebszustands angepasst wird.

5. Verfahren nach einem der vorherigen Ansprüche, wobei der aktuelle Betriebszustand in Abhängigkeit von einer momentanen Achslast des Nutzfahrzeugs bestimmt wird, wobei die momentane Achslast vorzugsweise mithilfe von mindestens einem Achslastsensor (13), beispielsweise mithilfe eines On-Board-Wiegesystems, ermittelt wird.

6. Verfahren nach einem der vorherigen Ansprüche, wobei die aktuelle Achskonfiguration oder ein hieraus abgeleiteter Korrekturparameter, der bei der Bestimmung des Fahrschlauches (3) verwendet wird, bei Fertigung des Nutzfahrzeugs im Nutzfahrzeug (1) hinterlegt wird.

7. Verfahren nach Anspruch 6, wobei die Achskonfiguration oder der hieraus abgeleitete Korrekturparameter abhängt von der Anzahl und Art der Achsen des Nutzfahrzeugs.

8. Verfahren nach einem der vorherigen Ansprüche, wobei das Verfahren ferner umfasst: Erfassen von Hindernissen im Umfeld des Fahrzeugs mittels einer Umfeldsensorik (6) und/oder einer Umfeldkarte des Nutzfahrzeugs und Bestimmen, ob sich ein Hindernis (7) innerhalb des bestimmten Fahrschlauches (6) befindet.

9. Verfahren nach einem der vorherigen Ansprüche, wobei die zukünftige Fahrzeugtrajektorie (2) in Abhängigkeit von der Fahrzeugeigenbewegung und zumindest einer der folgenden Größen bestimmt wird: einer Gierrate des Chassis, einer Querbeschleunigung des Chassis, einer Längsbeschleunigung des Chassis und einem erfassten Lenkwinkel der Räder.

10. Verfahren nach einem der vorherigen Ansprüche, wobei das Bestimmen des Fahrschlauchs (3) **auf** Basis von Korrekturfaktoren und/oder einer Kennlinienschar erfolgt, die eine Änderung des Fahrschlauchs bei einer Kurvenfahrt in Abhängigkeit von dem Betriebszustand oder zusätzlich auch von der Achskonfiguration der mindestens einen Achse angeben und die zuvor anhand von Fahrversuchen (20) mit unterschiedlichen Achskonfigurationen und/oder unterschiedlichen Betriebszuständen ermittelt wurden.

11. Verfahren nach einem der vorherigen Ansprüche, wobei das Bestimmen des Fahrschlauchs ferner umfasst:
- Bestimmen eines korrigierten Eigenlenkgradienten und/oder eines korrigierten Ackermann-Lenkwinkels in Abhängigkeit von dem Betriebszustand oder auch zusätzlich von der Achskonfiguration mindestens einer Achse, einer Gierrate des Chassis, einer Querbeschleunigung des Chassis und einer Längsbeschleunigung des Chassis; und
- Bestimmen eines korrigierten Fahrschlauches in Abhängigkeit des korrigierten Eigenlenkgradienten und/oder eines korrigierten Ackermann-Lenkwinkels.

12. Fahrerassistenzsystem (5) für ein Nutzfahrzeug (1), das ausgebildet ist, das Verfahren

13. Nutzfahrzeug, vorzugsweise Lastkraftwagen, umfassend ein Fahrerassistenzsystem (5) nach Anspruch 12.

## Claims

1. A method of determining a travelling tube of a commercial vehicle (2), the method comprising the steps of
- determination (S1) of a future vehicle trajectory (2); and
- determination (S2) of a travelling tube (3) as a function of the future vehicle trajectory (2);
wherein
the travelling tube (3) is determined as a function of a current operating state of at least one axle of the commercial vehicle (1), wherein the commercial vehicle (1) comprises at least one lift axle (1), which is preferably a liftable leading or trailing axle, and the current operating state of the axle indicates whether the lift axle is currently in the raised (10a) or lowered (10b) state.

2. Method according to claim 1, wherein the travelling tube (3) is additionally determined as a function of an axle configuration (4) of the commercial vehicle (1).

3. Method according to one of the previous claims, wherein the commercial vehicle (1) comprises at least one steered axle (12), which is not the front axle and is preferably a steered rigid axle (12), for example a steered leading or trailing axle, and the current operating state of the axle additionally indicates whether the steered rigid axle is currently in the steerable state (12a) or in the locked non-steerable state (12b).

4. Method according to one of the preceding claims, wherein a width (3a, 3b) of the travelling tube (3) is adapted during cornering as a function of the axle configuration (4) and/or the current operating state.

5. Method according to one of the preceding claims, wherein the current operating state is determined as a function of an instantaneous axle load of the commercial vehicle, wherein the instantaneous axle load is preferably determined with the aid of at least one axle load sensor (13), for example with the aid of an on-board weighing system.

6. Method according to one of the preceding claims, wherein the current axle configuration or a correction parameter derived therefrom, which is used in the determination of the travelling tube (3), is stored in the commercial vehicle (1) during production of the commercial vehicle.

7. The method according to claim 6, wherein the axle configuration or the correction parameter derived therefrom depends on the number and type of axles of the commercial vehicle.

8. A method according to any one of the preceding claims, the method further comprising: detecting obstacles in the environment of the vehicle by means of an environment sensor system (6) and/or an environment map of the commercial vehicle, and determining whether an obstacle (7) is located within the determined travelling tube (6).

9. Method according to one of the preceding claims, wherein the future vehicle trajectory (2) is determined as a function of the vehicle's own movement and at least one of the following variables: a yaw rate of the chassis, a lateral acceleration of the chassis, a longitudinal acceleration of the chassis and a detected steering angle of the wheels.

10. Method according to one of the preceding claims, wherein the determination of the travelling tube (3) is carried out on the basis of correction factors and/or a set of characteristic curves which indicate a change in the travelling tube during cornering as a function of the operating state or additionally also of the axle configuration of the at least one axle and which were previously determined on the basis of driving tests (20) with different axle configurations and/or different operating states.

11. A method according to any one of the preceding claims, wherein determining the travelling tube further comprises:
- determining a corrected self-steering gradient and/or a corrected Ackermann steering angle as a function of the operating state or also additionally of the axle configuration of at least one axle, a yaw rate of the chassis, a lateral acceleration of the chassis and a longitudinal acceleration of the chassis; and
- determination of a corrected travelling tube as a function of the corrected self-steering gradient and/or a corrected Ackermann steering angle.

12. A driver assistance system (5) for a commercial vehicle (1) adapted to perform the method according to any one of claims 1 to 9.

13. A commercial vehicle, preferably a lorry, comprising a driver assistance system (5) according to claim 12.

## Revendications

1. Procédé de détermination d'un couloir de roulement d'un véhicule utilitaire (2), le procédé comprenant les étapes suivantes :
- déterminer (S1) une future trajectoire de véhicule (2) ; et
- déterminer (S2) un couloir de roulement (3) en fonction de la future trajectoire de véhicule (2) ;
le couloir de roulement (3) étant déterminé en fonction d'un état de fonctionnement actuel d'au moins un essieu du véhicule utilitaire (1),
le véhicule utilitaire (1) comprenant au moins un essieu relevable (1) qui est de préférence un essieu avant ou arrière relevable, et l'état de fonctionnement actuel de l'essieu indiquant si l'essieu relevable se trouve actuellement dans l'état relevé (10a) ou abaissé (10b).

2. Procédé selon la revendication 1, le couloir de roulement (3) étant en outre déterminé en fonction d'une configuration d'essieux (4) du véhicule utilitaire (1).

3. Procédé selon l'une des revendications précédentes, le véhicule utilitaire (1) comprenant au moins un essieu orienté (12) qui n'est pas l'essieu avant et qui est de préférence un essieu rigide orienté (12), par exemple un essieu avant ou arrière orienté, et l'état de fonctionnement actuel de l'essieu indiquant en outre si l'essieu rigide orienté est actuellement dans l'état orientable (12a) ou dans l'état non orientable verrouillé (12b) .

4. Procédé selon l'une des revendications précédentes, une largeur (3a, 3b) du couloir de roulement (3) étant adaptée dans un virage en fonction de la configuration d'essieux (4) et/ou de l'état de fonctionnement actuel.

5. Procédé selon l'une des revendications précédentes, l'état de fonctionnement actuel étant déterminé en fonction d'une charge d'essieu actuelle du véhicule utilitaire, la charge d'essieu actuelle étant de préférence déterminée à l'aide d'au moins un capteur de charge d'essieu (13), par exemple à l'aide d'un système de pesée embarqué.

6. Procédé selon l'une des revendications précédentes, la configuration d'essieux actuelle ou un paramètre de correction dérivé de celle-ci, qui est utilisé pour déterminer le couloir de roulement (3), étant stockée dans le véhicule utilitaire (1) lors de la fabrication du véhicule utilitaire.

7. Procédé selon la revendication 6, la configuration d'essieux ou le paramètre de correction dérivé de celle-ci dépendant du nombre et du type d'essieux du véhicule utilitaire.

8. Procédé selon l'une des revendications précédentes, le procédé comprenant en outre les étapes suivantes : détecter des obstacles dans l'environnement du véhicule à l'aide d'un système de capteur d'environnement (6) et/ou d'une carte d'environnement du véhicule utilitaire et déterminer si un obstacle (7) se trouve dans le couloir de roulement déterminé (6).

9. Procédé selon l'une des revendications précédentes, la future trajectoire de véhicule (2) étant déterminée en fonction du mouvement propre du véhicule et d'au moins une des grandeurs suivantes : une vitesse de lacet du châssis, une accélération transversale du châssis, une accélération longitudinale du châssis et un angle de braquage détecté des roues.

10. Procédé selon l'une des revendications précédentes, la détermination du couloir de roulement (3) étant effectuée sur la base de facteurs de correction et/ou d'un ensemble de courbes caractéristiques qui indiquent une modification du couloir de roulement dans un virage en fonction de l'état de fonctionnement ou en outre également de la configuration d'essieux de l'au moins un essieu et qui ont été déterminés au préalable sur la base d'essais de roulement (20) avec différentes configurations d'essieux et/ou différents états de fonctionnement.

11. Procédé selon l'une des revendications précédentes, la détermination du couloir de roulement comprenant en outre les étapes suivantes :
- déterminer un gradient d'autoguidage corrigé et/ou un angle de braquage Ackermann corrigé en fonction de l'état de fonctionnement ou également en plus de la configuration d'essieux d'au moins un essieu, une vitesse de lacet du châssis, une accélération transversale du châssis et une accélération longitudinale du châssis ; et
- déterminer un couloir de roulement corrigé en fonction du gradient d'autoguidage corrigé et/ou d'un angle de braquage Ackermann corrigé.

12. Système d'aide à la conduite (5) destiné à un véhicule utilitaire (1), qui est conçu pour mettre en œuvre le procédé selon l'une des revendications 1 à 9.

13. Véhicule utilitaire, de préférence camion, comprenant un système d'aide à la conduite (5) selon la revendication 12.
